# EUROPÄISCHE PATENTSCHRIFT

(11) **EP 1 648 218 B1**
(45) Veröffentlichungstag und Bekanntmachung des Hinweises auf die Patenterteilung: **03.10.2007**
(21) Anmeldenummer: 04763385.4
(22) Anmeldetag: 21.07.2004
(51) Int. Cl.: A01G 9/08, B65C 9/00

(54) **TOPFMASCHINE ZUM EINTOPFEN VON BLUMENTÖPFEN**
MACHINE FOR POTTING FLOWER POTS
MACHINE DE MISE EN POT POUR METTRE DES PLANTES EN POT

(30) Priorität: 29.07.2003 DE 10334851
(43) Veröffentlichungstag der Anmeldung: 26.04.2006
(73) Patentinhaber: Siedlaczek, Udo, 47638 Straelen (DE)
(72) Erfinder: Siedlaczek, Udo, 47638 Straelen (DE)
(74) Vertreter: Gesthuysen, von Rohr & Eggert
(86) Internationale Anmeldenummer: PCT/EP2004/008165
(87) Internationale Veröffentlichungsnummer: WO 2005/011363

(56) Entgegenhaltungen:
- EP-A- 0 934 884
- DE-A- 19 927 139
- DE-B- 1 009 849
- DE-C- 19 841 907
- DE-U- 20 120 804

## Beschreibung

Die Erfindung betrifft eine Topfmaschine zum Eintopfen von Blumentöpfen, mit einer eine Mehrzahl von Topfaufnahmen für jeweils einen Blumentopf aufweisenden Fördereinrichtung und mit einem die Fördereinrichtung umgebenden Gehäusekranz.

Topfmaschinen der vorgenannten Art sind aus der Praxis bereits bekannt, siehe beispielsweise DE-U-20120804. Derartige Topfmaschinen weisen eine während des Eintopfbetriebes umlaufende Fördereinrichtung auf, bei der es sich in der Regel um eine Art Karussell handelt. Die Fördereinrichtung weist eine Mehrzahl von Topfaufnahmen auf, auf denen jeweils Blumentöpfe angeordnet werden. Die Fördereinrichtung wird von einem Gehäusekranz umgeben, der die Topfinaschine nach au-ßen hin begrenzt und im übrigen dem Auffangen von Erde, die während des Eintopfens herabfällt, dient.

Das Eintopfen von Blumentöpfen mit einer derartigen Topfmaschine erfolgt üblicherweise aufgrund der umlaufenden Fördereinrichtung im Endlosbetrieb, so daß nachfolgend auf die Verfahrensschritte nur eines Topfes eingegangen wird. Zunächst wird der einzutopfende Blumentopf einem Stapel von Blumentöpfen entnommen und auf eine freie Topfaufnahme der Fördereinrichtung gesetzt. Im nächsten Verfahrensschritt wird der Blumentopf mit Erde gefüllt. Anschließend wird in die in den Topf eingefüllte Erde ein Loch eingebracht, so daß im nächsten Verfahrensschritt eine einzutopfende Pflanze eingesetzt werden kann. Schließlich wird der Blumentopf von der Fördereinrichtung entnommen und über ein Abführband zur weiteren Verwendung abgeführt. Die einzelnen vorgenannten Verfahrensstufen können dabei automatisiert, teilautomatisiert oder aber manuell durchgeführt werden.

Da es erforderlich ist, die eingetopften Pflanzen zu kennzeichnen, werden die Blumentöpfe etikettiert. In der Praxis ist es so, daß vorab bereits etikettierte Blumentöpfe an das Eintopfunternehmen geliefert werden, so daß bereits etikettierte Blumentöpfe der Topfmaschine zugeführt werden. Die Vorab-Etikettierung hat jedoch verschiedene Nachteile. Zum einen erfordert die Vorab-Etikettierung eine hinreichende Logistik mit entsprechender Lagerhaltung beim Eintopfunternehmen, da stets entsprechende Mengen von vorab etikettierten Blumentöpfen bereitgehalten werden müssen. Zum anderen kann es beim Eintopfen zu einer Verschmutzung, Beschädigung oder sogar zum Abreißen der vorab auf die Blumentöpfe aufgebrachten Etiketten kommen.

Aufgabe der vorliegenden Erfindung ist es nun, die eingangs genannten Probleme zu vermeiden.

Zu Lösung der vorstehend angegebenen Aufgabe weist die Topfmaschine eine ihr zugeordnete Etikettiereinrichtung zum Etikettieren der Blumentöpfe auf. Die Etikettiereinrichtung selbst weist eine Spendezunge zum Abstreifen der Etiketten auf die Blumentöpfe auf. Darüber hinaus ist die Etikettiereinrichtung mit einer ein Gelenk aufweisenden Anstelleinrichtung mit einem Anstellarm verbunden, um auf diese Weise die Etikettiermaschine verschwenken und die Spendezunge an die Blumentöpfe anstellen zu können.

Die erfindungsgemäße Ausgestaltung bietet eine Reihe von Vorteilen. Durch die unmittelbare Zuordnung der Etikettiereinrichtung zur Topfmaschine ist sichergestellt, daß Blumentöpfe mit bereits aufgebrachten Etiketten nicht mehr vorgehalten werden müssen. Die Etikettierung erfolgt unmittelbar im Zusammenhang mit dem Eintopfen und damit in Abhängigkeit der einzutopfenden Pflanzen. Vorgehalten werden müssen lediglich noch entsprechende Etiketten oder aber es wird ein Drucker benötigt, der die Etiketten vor Ort kurz vor dem Aufbringen auf die Blumentöpfe bedruckt. Des weiteren wird durch die unmittelbare Zuordnung der Etikettiereinrichtung zur Topfmaschine der Etikettierprozeß in den Eintopfprozeß integriert, was aufgrund des Endlosbetriebes der Topfmaschine unproblematisch ist, wobei die Eintopfgeschwindigkeit durch das Etikettieren nicht beeinträchtigt wird. Besondere Bedeutung kommt in diesem Zusammenhang der Anstelleinrichtung zu. Über die Anstelleinrichtung mit dem Anstellarm und dem Gelenk ist es für den Benutzer ohne weiteres möglich, die Etikettiereinrichtung in eine Gebrauchsstellung, in der die Spendezunge an den Blumentöpfen zum Aufbringen der Etiketten anliegt, oder in eine Nicht-Gebrauchsstellung, wenn keine Etiketten auf die Blumentöpfe aufgebracht werden, zu verschwenken.

In diesem Zusammenhang versteht es sich natürlich, daß die Integration der Etikettiereinrichtung in das Eintopfverfahren und damit das Etikettieren auf die Geschwindigkeit der Fördereinrichtung derart abgestimmt ist, daß jeder Blumentopf mit einem Etikett versehen wird.

Von besonderem Vorteil ist es, daß der Anstellarm mit einem Befestigungsmittel zur lösbaren Befestigung am Gehäusekranz oder an einem der Topfmaschine zugeordneten Abführband verbunden ist. Durch die lösbare Befestigung der Etikettiereinrichtung an der Topfmaschine bzw. dem der Topfmaschine zugeordneten Abführband ergeben sich letztlich zwei wesentliche Vorteile. Zum einen können bereits vorhandene Topfmaschinen ohne weiteres mit der erfindungsgemäßen Etikettiereinrichtung mit Anstelleinrichtung nachgerüstet werden. Zum anderen kann die erfindungsgemäße Etikettiereinrichtung bedarfsweise an jeder Stelle in das Eintopfverfahren integriert werden. Das Etikettieren kann also beispielsweise zwischen dem Entstapeln der Blumentöpfe und dem Einfüllen von Erde oder aber während des Abführens stattfinden.

Um eine schnelle und sichere Befestigung zu ermöglichen, kann das Befestigungsmittel zum reibschlüssigen und/oder formschlüssigen Befestigen vorgesehen sein. So ist beispielsweise ein Verklemmen auf oder an dem Gehäusekranz oder aber ein Verschrauben damit ohne weiteres möglich. Das Befestigungsmittel kann beispielsweise als gebogener Blechabschnitt ausgebildet sein, der einen mittigen Aufnahmeschlitz aufweist. Der Aufnahmeschlitz ist auf die Dicke des Gehäusekranzes abgestimmt und wird auf diesen von oben aufgeschoben. Es versteht sich natürlich, daß es grundsätzlich auch möglich ist, statt der lösbaren Befestigung eine nicht-lösbare Befestigung vorzusehen. In beiden Fällen ist es allerdings so, daß das Gelenk zwischen dem Befestigungsmittel und dem Anstellarm vorgesehen ist, um eine Bewegung des ersten Anstellarms gegenüber dem Befestigungsmittel zu ermöglichen.

Obwohl es möglich ist, die Anstellung der Etikettiereinrichtung lediglich über einen, gegebenenfalls auch mehrfach gebogenen oder winkeligen Anstellarm zu realisieren, kann auch vorgesehen sein, daß die Anstelleinrichtung wenigstens einen weiteren Anstellarm aufweist, wobei die einzelnen Anstellarme dann jeweils über ein weiteres Gelenk miteinander verbunden sind. In diesem Falle bietet es sich an, die Etikettiereinrichtung mit dem weiteren Anstellarm zu verbinden. Bei der einarmigen Ausführung ist die Etikettiereinrichtung dann dementsprechend mit dem einzigen Anstellarm verbunden.

Um sowohl kleine als auch große Blumentöpfe an der gewünschten Stelle etikettieren zu können, ist im übrigen vorgesehen, daß die Etikettiereinrichtung insbesondere über die Anstelleinrichtung höhenverstellbar ist. Die Höhenverstellung kann dabei grundsätzlich an jeder Stelle zwischen dem Befestigungsmittel und der Spendezunge erfolgen. Eine konstruktiv besonders einfache Ausgestaltung sieht vor, daß der Anstellarm gegenüber dem Befestigungsmittel höhenverstellbar ist, wobei in diesem Falle der Anstellarm als Winkel ausgebildet ist und einen horizontalen Schenkel und einen vertikalen Schenkel aufweist. Der horizontale Schenkel dient dabei der Befestigung der Etikettiereinrichtung, während der vertikale Schenkel zur Befestigung und Höhenverstellung dient. Der vertikale Schenkel ist in diesem Falle dann Teil des Gelenks. Im übrigen ermöglicht es der horizontale Schenkel als Teil des weiteren Gelenkes nicht nur, die Etikettiereinrichtung um die Längsachse des horizontalen Schenkels zu verschwenken, sondern diese auch entlang des horizontalen Schenkels zu verschieben.

Um die Spendezunge der Etikettiereinrichtung an die Blumentöpfe automatisch und mit der erforderlichen Andruckkraft anzustellen, kann eine auf die Etikettiereinrichtung wirkende Federeinrichtung vorgesehen sein. Bei der zweiarmigen Ausführungsform kann die Federeinrichtung dabei als wenigstens ein Zugfedermittel ausgebildet sein, das zwischen den Anstellarmen vorgesehen ist. Bei der einarmigen Ausführung, d.h. mit nur einem Anstellarm, ist das Zugfedermittel zwischen dem Anstellarm und dem Gehäusekranz oder aber dem Abführband, je nach Anordnung der Etikettiereinrichtung, vorgesehen.

Um die Etikettiereinrichtung und damit die Spendezunge an die Konizität der Blumentöpfe anzupassen, bietet es sich an, daß die Etikettiereinrichtung um die Längsachse des Anstellarms oder des weiteren Anstellarms oder eine dazu parallele Achse verschwenkbar ist. Hierzu ist dann ein weiteres Gelenk vorgesehen.

Obwohl es grundsätzlich möglich ist, die einzelnen Gelenke in Art von einfachen Scharnieren derart auszubilden, daß eine Verschwenkung nur um eine Achse möglich ist. Grundsätzlich ist es aber auch möglich, einzelne oder jedes der Gelenke derart auszubilden, daß eine Bewegung um wenigstens zwei Achsen möglich ist. Dies schließt im übrigen auch Kugelgelenke ein, die letztlich eine Bewegung in jeglicher Richtung ermöglichen.

In jedem Falle sollten den Gelenken allerdings Feststellmittel zur Feststellung in jeder Schwenkstellung zugeordnet sein, um die Etikettiereinrichtung bedarfsweise in jeder gewünschten Stellung fixieren zu können.

Nachfolgend werden Ausführungsbeispiele der Erfindung anhand der Zeichnung beschrieben. Dabei zeigt
- Fig. 1: eine schematische Draufsicht einer erfindungsgemäßen Topfinaschine,
- Fig. 2: eine schematische Draufsicht auf eine Etikettiereinrichtung,
- Fig. 3: eine der Fig. 1 entsprechende Ansicht einer anderen Ausführungsform einer erfindungsgemäßen Topfmaschine,
- Fig. 4: eine schematische Draufsicht auf eine weitere Ausführungsform einer erfindungsgemäßen Topfmaschine und
- Fig. 5: eine perspektivische Ansicht eines Teil der Topfmaschine aus Fig. 4.

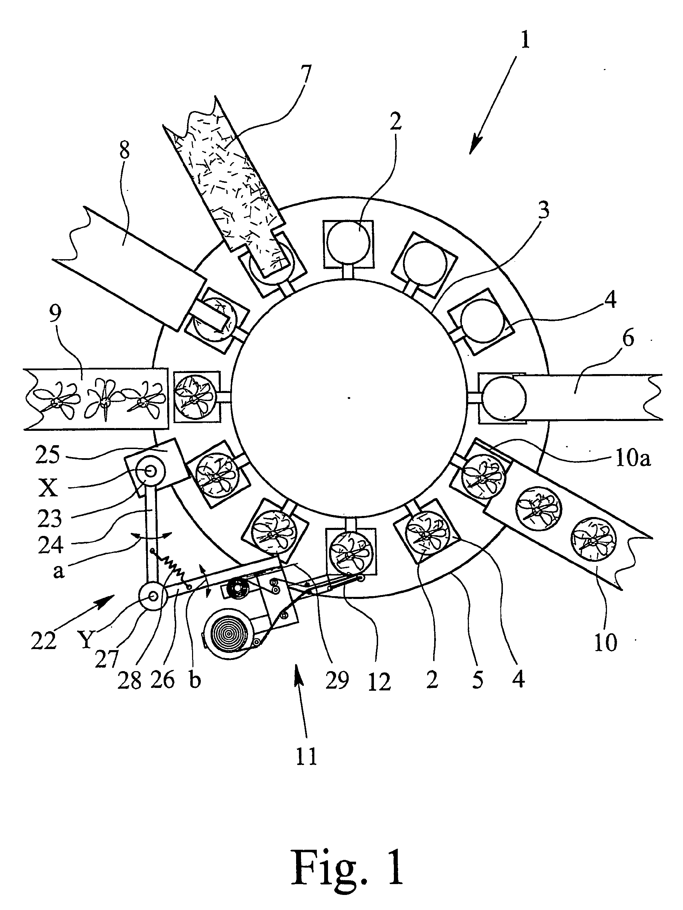

In Fig. 1 ist eine Topfmaschine 1 zum Eintopfen von Blumentöpfen 2 dargestellt. Die Topfmaschine 1 weist eine vorliegend als Karussell ausgebildete Fördereinrichtung 3 auf, an der eine Mehrzahl von Topfaufnahmen 4 für jeweils einen Blumentopf 2 vorgesehen sind. Es darf darauf hingewiesen werden, daß statt der in Art eines Karussells ausgebildeten Fördereinrichtung 3 grundsätzlich auch ein umlaufendes Fördermittel in Art eines Förderbandes vorgesehen sein kann. Die Fördereinrichtung 3 befindet sich innerhalb eines Gehäusekranzes 5. Beim Gehäusekranz 5 handelt es sich um ein nach oben offenes Gehäuse, das einerseits zum äußeren Abschluß und andererseits zum Auffangen herabfallender Erde oder Blumentöpfe 2 während des Eintopfens dient.

Die in Fig. 1 dargestellte Topfmaschine 1 weist eine Einrichtung 6 zum Entstapeln von Blumentöpfen 2, eine Einrichtung 7 zum Einbringen von Erde in die Blumentöpfe 2, eine Einrichtung 8 zum Einbringen eines Loches in die Erde in den Blumentöpfen 2, eine Einrichtung 9 zum Einbringen einer Pflanze und eine Abführeinrichtung 10 mit einem Abstreifer 10a auf. Es darf darauf hingewiesen werden, daß die einzelnen Einrichtungen lediglich schematisch dargestellt sind. Nicht dargestellt ist im übrigen eine die einzelnen Verfahrensabläufe steuernde und koordinierende Steuereinrichtung, über die die Geschwindigkeit der Fördereinrichtung 3 und die Geschwindigkeiten der einzelnen Einrichtungen 6 bis 9 und der Abführeinrichtung 10 gesteuert wird.

Bei der dargestellten Topfinaschine 1 handelt es sich um eine vollautomatische Topfinaschine. Es wird allerdings darauf hingewiesen, daß es grundsätzlich auch möglich ist, auf jede der einzelnen Einrichtungen 6 bis 10 bedarfsweise zu verzichten. Die entsprechenden Vorgänge können auch manuell durchgeführt werden. Auch eine Teilautomatisierung ist möglich. So können beispielsweise die Einrichtungen 6 bis 8 und 10 vorgesehen sein, während das Einpflanzen manuell erfolgt. Auch kann auf die Einrichtungen 8 und 9 verzichtet werden, wenn das Einbringen der Pflanzen an anderer Stelle erfolgt. Die Topfmaschine 1 dient dann lediglich zum Einbringen von Erde.

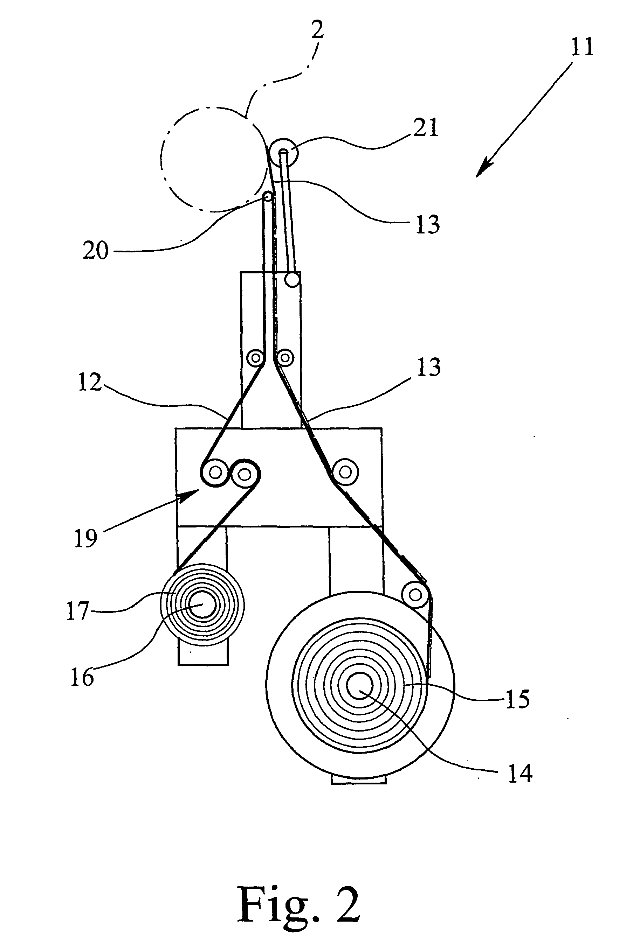

Bei der Topfmaschine 1 ist nun zusätzlich eine Etikettiereinrichtung 11 zum Etikettieren der Blumentöpfe 2 während des Eintopfens vorgesehen. Die Etikettiereinrichtung 11, die in Fig. 2 näher dargestellt ist, weist eine Spendezunge 12 auf. Während des Etikettierens befindet sich die Spendezunge 12 mit ihrem Ende an den Blumentöpfen 2 und streift jeweils ein Etikett 13 auf jeden der Blumentöpfe 2 ab. Dabei versteht es sich, daß die Etikettiereinrichtung 11 in gleicher Weise mit der nicht dargestellten Steuereinrichtung gekoppelt und in das Gesamtverfahren integriert ist wie auch die anderen Einrichtungen.

Die Etikettiereinrichtung 11 weist vorliegend ein Lager 14 für eine Etikettenrolle 15 sowie ein Lager 16 für die Leerrolle 17 auf. Bei den Lagern 14, 16 handelt es sich vorliegend um entsprechende Zapfen, wobei zumindest das Lager 16 einen Drehantrieb zum Aufwickeln der Leerrolle aufweist. Des weiteren ist eine Antriebseinrichtung 18 vorgesehen, die vorliegend zwei Druckrollen aufweist. Die Antriebseinrichtung 18 wirkt in dem Bereich, in dem bereits die Etiketten vom Etikettenband 19 abgeschält worden sind. Darüber hinaus sind zur Führung des Etikettenbandes 19 verschiedene Umlenkrollen vorgesehen. Im Bereich der Spendezunge 12 wird das Etikettenband 19 eng beieinander und im wesentlichen parallel zueinander geführt. Am Ende der Spendezunge 12 befindet sich eine Umlenkrolle 20, an der das Etikettenband 19 um etwa 180° umgelenkt wird, so daß sich ein Abschälen der Etiketten 13 an dieser Stelle ergibt. Auf das abgeschälte Etikett 13 wirkt eine Andruckrolle 21, die federbelastet ist, wodurch das abgeschälte Etikett 13 mit der Klebeseite auf die Außenwandung des vorbeigeführten Blumentopfes 2 gedrückt wird.

Die Etikettiereinrichtung 11 ist mit einer Anstelleinrichtung 22 verbunden, die ein Verschwenken der Etikettiereinrichtung 11 und ein Anstellen der Spendezunge 12 an die zu etikettierenden Blumentöpfe 2 ermöglicht. Die Anstelleinrichtung 22 weist vorliegend ein Gelenk 23 und einen Anstellarm 24 auf. Bei der dargestellten Ausführungsform ist im übrigen vorgesehen, daß endseitig am Anstellarm 24 ein Befestigungsmittel 25 zur lösbaren Befestigung am Gehäusekranz 5 vorgesehen ist. Das Befestigungsmittel 25 ist im einzelnen in Fig. 1 nicht dargestellt. Vorliegend handelt es sich jedoch um ein den Gehäusekranz 5 von oben her übergreifendes, d.h. auf den Gehäusekranz 5 aufgestecktes Profil, das gegebenenfalls über eine Schraubverbindung am Gehäusekranz 5 klemmend gehalten ist. Auch eine Verschraubung oder eine dauerhafte Befestigung, beispielsweise über eine Schweißverbindung, sind grundsätzlich möglich. Um den Anstellarm 24 gegenüber dem Befestigungsmittel 25 bewegen zu können, ist dazwischen das Gelenk 23 vorgesehen. Bei dem Gelenk 23 handelt es sich vorliegend um eine Art Scharnier, das um eine vertikal verlaufende Achse X schwenkt und damit eine Bewegung des Anstellarmes 24 in Pfeilrichtung a ermöglicht.

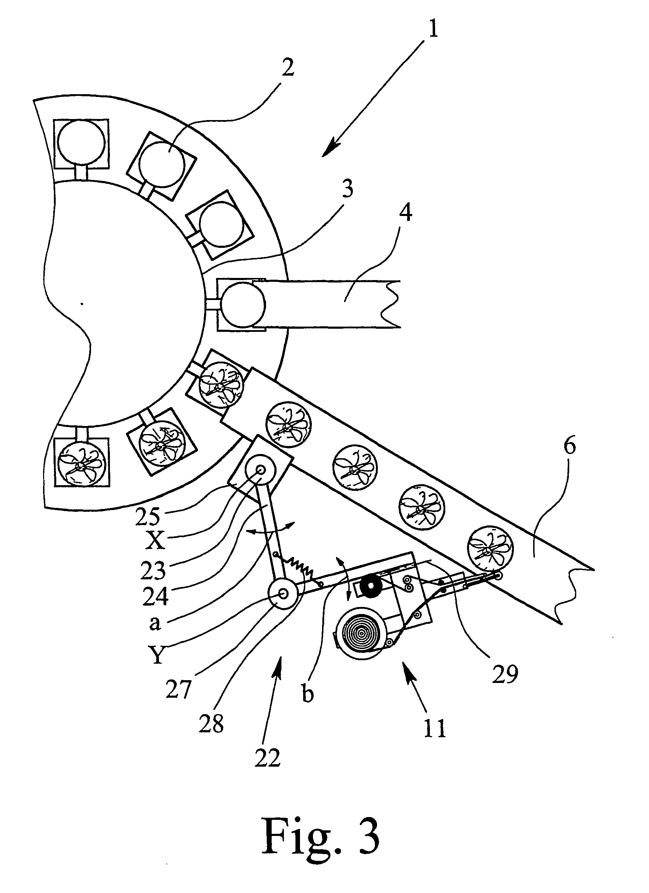

Die Anstelleinrichtung 22 weist bei den in den Fig. 1 und 3 dargestellten Ausführungsformen im übrigen einen weiteren Anstellarm 26 auf, wobei der Anstellarm 24 und der weitere Anstellarm 26 über ein weiteres Gelenk 27 miteinander verbunden sind. Das weitere Gelenk 27 entspricht von der Funktion her dem Gelenk 23, so daß der weitere Anstellarm 26 um die Achse Y in Bewegungsrichtung b verstellbar ist. Die Achse Y ist parallel zur Achse X. Die Etikettiereinrichtung 11 selbst ist endseitig mit dem weiteren Anstellarm 26 verbunden.

Zwischen dem Anstellarm 24 und dem weiteren Anstellarm 26 befindet sich vorliegend ein Zugfedermittel 28, was dazu führt, daß die Spendezunge 12 federbelastet an dem jeweils zu etikettierenden Blumentopf 2 anliegt. Im Hinblick auf die federbelastete Andruckrolle 21 kann auf das Zugfedermittel 28 aber auch verzichtet werden.

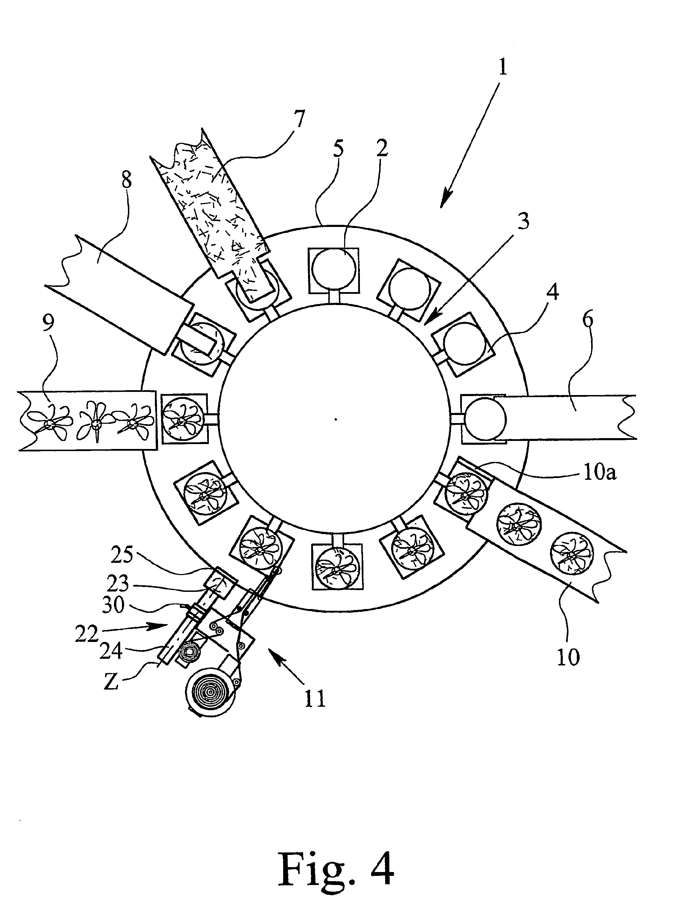

Zwischen dem weiteren Anstellarm 26 und der Etikettiereinrichtung 11 befindet sich vorliegend ein weiteres Gelenk 29. Das weitere Gelenk 29 ist wiederum in Art eines Scharniers ausgebildet, das um eine in Fig. 4 dargestellte horizontal verlaufende Achse Z schwenkt. Die Verschwenkung um das weitere Gelenk 29 ermöglicht damit eine Schrägstellung der Spendezunge 12 in Abhängigkeit der Konizität der zu etikettierenden Blumentöpfe. Dem gegenüber kann über das Gelenk 23 und das weitere Gelenk 27 sowie den Anstellarm 24 und den weiteren Anstellarm 26 eine Anstellung der Etikettiereinrichtung 11 in Abhängigkeit der Topfgröße erfolgen.

Die in Fig. 3 dargestellte Topfmaschine 1 unterscheidet sich von der in Fig. 1 dargestellten dadurch, daß die Etikettiereinrichtung 11 nicht am Gehäusekranz 5 befestigt ist, sondern an der Abführeinrichtung 10. Weitere Unterschiede zwischen beiden Ausführungsformen gibt es nicht.

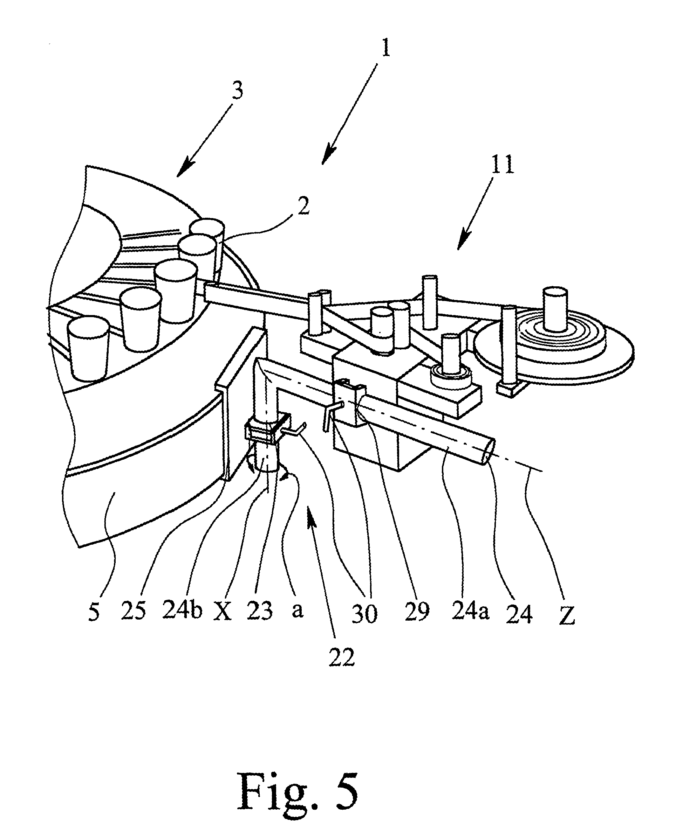

Bei der in den Fig. 4 und 5 dargestellten Ausführungsform weist die Anstelleinrichtung 22 lediglich einen Anstellarm 24 auf. Der Anstellarm 24 ist als Winkel ausgebildet und weist einen horizontalen Schenkel 24a und einen vertikalen Schenkel 24b auf. Am horizontalen Schenkel 24a ist über das weitere Gelenk 29 die Etikettiereinrichtung 11 befestigt. Dem gegenüber ist der horizontale Schenkel 24b über das Gelenk 23 mit dem wie zuvor beschriebenen Befestigungsmittel 25, das auf den Gehäusekranz 5 aufgesteckt ist, verbunden. Sowohl dem Gelenk 23 als auch dem weiteren Gelenk 29 ist ein Feststellmittel 30 in Art eines Schraubhebels zugeordnet. Das Feststellmittel 30 wirkt dabei jeweils auf den betreffenden Schenkel 24a, 24b. Nach Lösen des Feststellmittels 30 am Gelenk 23 kann der Schenkel 24a und damit die Etikettiereinrichtung 11 um die Achse X in Richtung a verschwenkt werden. Außerdem kann, da der Schenkel 24b langgestreckt ist, eine Höhenverstellung in Richtung der Achse X erfolgen. Nach Einstellung der korrekten Schwenkstellung einerseits und Höhenstellung andererseits wird das Gelenk 23 über das Feststellmittel 30 festgestellt. Dem gegenüber kann die Etikettiereinrichtung 11 nach Lösen des Feststellmittels 30 des Gelenks 29 entlang des Schenkels 24a einerseits bewegt und um die Achse Z andererseits geschwenkt werden. Nach Einstellung der richtigen Stellung wird über das Feststellmittel 30 die Feststellung vorgenommen.

## Patentansprüche

1. Topfinaschine (1) zum Eintopfen von Blumentöpfen (2), mit einer eine Mehrzahl von Topfaufnahmen (4) für jeweils einen Blumentopf (2) aufweisenden Fördereinrichtung (3), mit einem die Fördereinrichtung (3) umgebenden Gehäusekranz (5) **gekennzeichnet durch** eine Etikettiereinrichtung (11) zum Etikettieren der Blumentöpfe (2), wobei die Etikettiereinrichtung (11) eine Spendezunge (12) zum Abstreifen von Etiketten (13) auf die Blumentöpfe (2) aufweist, wobei mit der Etikettiereinrichtung (11) eine ein Gelenk (23) aufweisende Anstelleinrichtung (22) mit einem Anstellarm (24) zum Verschwenken der Etikettiereinrichtung (11) und Anstellen der Spendezunge (12) an die Blumentöpfe (2) verbunden ist.

2. Topfmaschine nach Anspruch 1, **dadurch gekennzeichnet, daß** endseitig am Anstellarm (24) ein Befestigungsmittel (25) zur lösbaren Befestigung am Gehäusekranz (5) oder an einer der Topfmaschine (1) zugeordneten Abführeinrichtung (10) vorgesehen ist.

3. Topfmaschine nach Anspruch 1 oder 2, **dadurch gekennzeichnet, daß** das Befestigungsmittel (25) zum reibschlüssigen und/oder formschlüssigen Befestigen vorgesehen ist.

4. Topfmaschine nach Anspruch 1, **dadurch gekennzeichnet, daß** der Anstellarm (24) über ein Befestigungsmittel fest mit dem Gehäusekranz (5) oder mit einer der Topfmaschine (1) zugeordneten Abführeinrichtung (10) verbunden ist.

5. Topfmaschine nach einem der vorhergehenden Ansprüche, **dadurch gekennzeichnet, daß** das Gelenk (23) zwischen dem Befestigungsmittel (25) und dem Anstellarm (24) vorgesehen ist.

6. Topfmaschine nach einem der vorhergehenden Ansprüche, **dadurch gekennzeichnet, daß** die Anstelleinrichtung (22) wenigstens einen weiteren Anstellarm (26) aufweist und daß der Anstellarm (24) und der weitere Anstellarm (26) über ein weiteres Gelenk (27) miteinander verbunden sind.

7. Topfmaschine nach einem der vorhergehenden Ansprüche, **dadurch gekennzeichnet, daß** die Etikettiereinrichtung (11) derart federbelastet ist, daß die Spendezunge (12) automatisch an die Blumentöpfe (2) angestellt wird.

8. Topfmaschine nach einem der vorhergehenden Ansprüche, **dadurch gekennzeichnet, daß** zwischen dem Anstellarm (24) und dem weiteren Anstellarm (26) und/oder zwischen dem Anstellarm (24) und dem Gehäusekranz (5) bzw. der Abführeinrichtung (10) wenigstens ein Zugfedermittel (28) vorgesehen ist.

9. Topfmaschine nach einem der vorhergehenden Ansprüche, **dadurch gekennzeichnet, daß** die Etikettiereinrichtung (11) mit dem Anstellarm (24) oder dem weiteren Anstellarm (26) verbunden ist.

10. Topfmaschine nach einem der vorhergehenden Ansprüche, **dadurch gekennzeichnet, daß** die Etikettiereinrichtung (11) insbesondere über die Anstelleinrichtung (22) höhenverstellbar ist.

11. Topfmaschine nach einem der vorhergehenden Ansprüche, **dadurch gekennzeichnet, daß** der Anstellarm (24) gegenüber dem Befestigungsmittel (25) höhenverstellbar ist.

12. Topfmaschine nach einem der vorhergehenden Ansprüche, **dadurch gekennzeichnet, daß** der Anstellarm (24) als Winkel mit einem horizontalen Schenkel (24a) und einem vertikalen Schenkel (24b) ausgebildet ist.

13. Topfmaschine nach einem der vorhergehenden Ansprüche, **dadurch gekennzeichnet, daß** die Etikettiereinrichtung (11) um die Längsachse (Z) des Anstellarms (24) oder des weiteren Anstellarms (26) oder eine dazu parallele Achse über ein weiteres Gelenk (29) verschwenkbar ist.

14. Topfmaschine nach einem der vorhergehenden Ansprüche, **dadurch gekennzeichnet, daß** das erste Gelenk (23) und/oder weitere Gelenke (27, 29) derart ausgebildet sind, daß eine Bewegung um wenigstens zwei Achsen möglich ist.

15. Topfinaschine nach einem der vorhergehenden Ansprüche, **dadurch gekennzeichnet, daß** dem Gelenk (23) und/oder dem weiteren Gelenk (27, 29) ein Feststellmittel (30) zur Feststellung in jeder Schwenkstellung zugeordnet ist.

## Claims

1. Potting machine (1) for potting flowerpots (2), with a conveying device (3) comprising a plurality of pot retainers (4) for a respective flowerpot (2), with a housing ring (5) surrounding the conveying device (3),
**characterized by**
a labelling device (11) for labelling the flowerpots (2), whereby the labelling device (11) comprises a dispensing tongue (12) for stripping off labels (13) and applies them to the flowerpots (2), whereby a positioning device (22) comprising a joint (23) and a positioning arm (24) for pivoting the labelling device (11) and positioning the dispensing tongue (12) against the flowerpots (2) is connected to the labelling device (11).

2. Potting machine according to Claim 1, **characterized in that** a mounting means (25) is provided at the end of the positoning arm (24) for detachable mounting on the housing ring (5) or on a discharge device (10) assigned to the potting machine (1).

3. Potting machine according to Claim 1 or 2, **characterized in that** the mounting means (25) is intended for frictional and/or positive mounting.

4. Potting machine according to Claim 1, **characterized in that** the postioning arm (24) is firmly connected via a mounting means to the housing ring (5) or to a discharge device (10) assigned to the potting machine (1).

5. Potting machine according to one of the preceding claims, **characterized in that** the joint (23) is provided between the mounting means (25) and the positioning arm (24).

6. Potting machine according to one of the preceding claims, **characterized in that** the positioning device (22) comprises at least one further positioning arm (26) and **in that** the postioning arm (24) and the further positioning arm (26) are connected to one another via a further joint (27).

7. Potting machine according to one of the preceding claims, **characterized in that** the labelling device (11) is spring-loaded in such a way that the dispensing tongue (12) is positioned automatically against the flowerpots (2).

8. Potting machine according to one of the preceding claims, **characterized in that** at least one spring-tension means (28) is provided between the positioning arm (24) and the further positioning arm (26) and/or between the positioning arm (24) and the housing ring (5) or the discharge device (10).

9. Potting machine according to one of the preceding claims, **characterized in that** the labelling device (11) is connected to the positioning arm (24) or to the further positioning arm (26).

10. Potting machine according to one of the preceding claims, **characterized in that** the labelling device is height-adjustable, particularly via the positioning device (22).

11. Potting machine according to one of the preceding claims, **characterized in that** the postioning arm (24) is height-adjustable with respect to the mounting means (25).

12. Potting machine according to one of the preceding claims, **characterized in that** the positioning arm (24) is designed as an angle with a horizontal leg (24a) and a vertical leg (24b).

13. Potting machine according to one of the preceding claims, **characterized in that** the labelling device (11) is able to pivot about the longitudinal axis (Z) of the positioning arm (24) or of the further positioning arm (26), or about an axis parallel thereto, via a further joint (29).

14. Potting machine according to one of the preceding claims, **characterized in that** the first joint (23) and/or further joints (27, 29) are designed in such a way that a movement is possible about at least two axes.

15. Potting machine according to one of the preceding claims, **characterized in that** the joint (23) and/or the further joint (27, 29) is or are assigned a locking means (30) for locking in any pivoting position.

## Revendications

1. Machine de mise en pot (1) pour mettre en pot des plantes (2), comprenant une pluralité de logements de pots (4) pour à chaque fois un dispositif de transport (3) présentant une plante (2), comprenant une couronne d'enceinte (5) entourant le dispositif de transport (3), **caractérisée par** un dispositif d'étiquetage (11) pour l'étiquetage des plantes (2), le dispositif d'étiquetage (11) présentant une langue de distribution (12) pour appliquer des étiquettes (13) sur les plantes (2), le dispositif d'étiquetage (11) étant relié à un dispositif de positionnement (22) présentant une articulation (23), avec un bras de positionnement (24) pour faire pivoter le dispositif d'étiquetage (11) et pour positionner la langue de distribution (12) contre les plantes (2).

2. Machine de mise en pot selon la revendication 1, **caractérisée en ce que** du côté de l'extrémité sur le bras de positionnement (24) est prévu un moyen de fixation (25) pour la fixation desserrable sur la couronne d'enceinte (5) ou sur un dispositif d'évacuation (10) associé à la machine de mise en pot (1).

3. Machine de mise en pot selon la revendication 1 ou 2, **caractérisée en ce que** le moyen de fixation (25) est prévu pour la fixation par engagement par frottement et/ou par coopération de forme.

4. Machine de mise en pot selon la revendication 1, **caractérisée en ce que** le bras de positionnement (24) est connecté fixement à la couronne d'enceinte (5) ou à un dispositif d'évacuation (10) associé à la machine de mise en pot (1) par le biais d'un moyen de fixation.

5. Machine de mise en pot selon l'une quelconque des revendications précédentes, **caractérisée en ce que** l'articulation (23) est prévue entre le moyen de fixation (25) et le bras de positionnement (24).

6. Machine de mise en pot selon l'une quelconque des revendications précédentes, **caractérisée en ce que** le dispositif de positionnement (22) présente au moins un autre bras de positionnement (26) et **en ce que** le bras de positionnement (24) et l'autre bras de positionnement (26) sont connectés l'un à l'autre par le biais d'une autre articulation (27).

7. Machine de mise en pot selon l'une quelconque des revendications précédentes, **caractérisée en ce que** le dispositif d'étiquetage (11) est sollicité par ressort de telle sorte que la langue de distribution (12) soit positionnée automatiquement sur les plantes (2).

8. Machine de mise en pot selon l'une quelconque des revendications précédentes, **caractérisée en ce qu'**entre le bras de positionnement (24) et l'autre bras de positionnement (26) et/ou entre le bras de positionnement (24) et la couronne d'enceinte (5) ou le dispositif d'évacuation (10) est prévu au moins un moyen de ressort de traction (28).

9. Machine de mise en pot selon l'une quelconque des revendications précédentes, **caractérisée en ce que** le dispositif d'étiquetage (11) est connecté au bras de positionnement (24) ou à l'autre bras de positionnement (26).

10. Machine de mise en pot selon l'une quelconque des revendications précédentes, **caractérisée en ce que** le dispositif d'étiquetage (11) peut être ajusté en hauteur notamment par le biais du dispositif de positionnement (22).

11. Machine de mise en pot selon l'une quelconque des revendications précédentes, **caractérisée en ce que** le bras de positionnement (24) peut être ajusté en hauteur par rapport au moyen de fixation (25).

12. Machine de mise en pot selon l'une quelconque des revendications précédentes, **caractérisée en ce que** le bras de positionnement (24) est réalisé sous forme d'équerre avec une branche horizontale (24a) et une branche verticale (24b).

13. Machine de mise en pot selon l'une quelconque des revendications précédentes, **caractérisée en ce que** le dispositif d'étiquetage (11) peut pivoter autour de l'axe longitudinal (Z) du bras de positionnement (24) ou de l'autre bras de positionnement (26) ou d'un axe parallèle à celui-ci, par le biais d'une autre articulation (29).

14. Machine de mise en pot selon l'une quelconque des revendications précédentes, **caractérisée en ce que** la première articulation (23) et/ou d'autres articulations (27, 29) sont réalisées de telle sorte qu'un mouvement autour d'au moins deux axes soit possible.

15. Machine de mise en pot selon l'une quelconque des revendications précédentes, **caractérisée en ce que** l'on associe à l'articulation (23) et/ou à l'autre articulation (27, 29) un moyen de fixation (30) pour la fixation dans chaque position de pivotement.
